Europäisches Patentamt

European Patent Office

Office européen des brevets

(11) Publication number: **0 498 384 A2**

# EUROPEAN PATENT APPLICATION

(21) Application number: **92101871.9**

(22) Date of filing: **05.02.92**

(51) Int. Cl.5: **B29C 67/24**, B29C 43/28

(30) Priority: **06.02.91 JP 35032/91**

(43) Date of publication of application:
**12.08.92 Bulletin 92/33**

(84) Designated Contracting States:
**BE DE DK FR GB IT NL SE**

(71) Applicant: **NIPPON ZEON CO., LTD.**
**6-1, Marunouchi 2-chome**
**Chiyoda-ku Tokyo 100(JP)**

(72) Inventor: **Ueno, Susumu**
**3-3-403, Inamuragasaki 5-chome**
**Kamakura-shi, Kanagawa(JP)**
Inventor: **Okumura, Kin-Ichi**
**801-6-143, Kamimachiya**
**Kamakura-shi, Kanagawa(JP)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Integrally molded composites and method therefor.**

(57) Polyvinyl halide compositions inherently interfere with the ring-opening polymerization of norbornene monomers. A method of making an integrally molded composite article composed of a ring-opened polynorbornene matrix and a polyvinyl halide lamina and/or a core component is disclosed. By removing certain components used in the manufacture and compounding of polyvinyl halide resins, a polyvinyl halide lamina can be integrally molded to a polynorbornene matrix via metathesis ring-opening polymerization of norbornene-type monomers.

EP 0 498 384 A2

## BACKGROUND OF THE INVENTION

### 1. Technical Field

This invention relates to integrally molded composite articles and to a method for making same. More particularly, this invention relates to an integrally molded composite comprising a polynorbornene matrix and a halogenated polyvinyl lamina layer such as polyvinyl chloride. The method of the invention is achieved via an in-mold polymerization process wherein a norbornene-type monomer is bulk polymerized in intimate contact with a halogenated polyvinyl lamina.

### 2. State of the Art

Composite panels comprising a foam or nonfoam plastic core sandwiched between or laminated onto a metal or plastic sheet(s), have been adopted for use as automobile body panels, building panels, and in the superstructure of watercraft, etc. Such panels are lightweight rigid and have good impact resistance. These composite panels are produced by thermally pressing an adhesive coated surface lamina to a core material. However, the manufacture of such composites has been problematic in that the application of the adhesive to the lamina requires an extra production step, not to mention the environmental concerns brought about by the use of adhesives, particularly solvent-based adhesives.

It has been proposed, as disclosed in Japanese Kokai No. 62-122718, to polymerize a norbornene-type monomer in intimate contact with a surface of a metal or plastic lamina to yield a composite panel comprising a plastic or metal surface layer with an underlying polynorbornene matrix layer. However, such composites have suffered drawbacks in that the adhesion between the metal or plastic layers and the underlying polynorbornene matrix has been insufficient. Consequently, the surface layers tend to delaminate from the matrix. Furthermore, it is difficult to colorize the surface layer(s), and to lamina such layer(s) to substrates having complex configurations. Accordingly, colored composite molded articles have been difficult to obtain.

Polynorbornene articles obtained by RIM are usually brown or yellow in appearance. Improvement of the surface appearance has been attempted by the painting and coating of such articles, particularly when these articles are used outdoors because of insufficient weathering properties. In coating a molded product, the article must be thoroughly rinsed with solvent and warm water to remove any mold release agent and grime from handling that have deposited on the surface during molding and handling operations. The article is subsequently subjected to a primer treatment followed by a finish coat treatment. These coating steps are complex, time consuming and often difficult. Moreover, molded polynorbornene articles obtained by RIM generally present problems in that pin holes readily form on the surface of the article when painted. Although pigments can be directly incorporated into the norbornene monomer before polymerization, the color tends to fade with time.

Recently, the use of a polyolefin and/or thermosetting hydrocarbon elastomers for laminating onto a polynorbornene substrate has been disclosed in Japanese Kokai 1-316262. This composite molded product has improved interface adhesion between lamina layers, is easily colored, has improved weather resistance, no surface defects, and improved physical properties. Also, by utilizing the above mentioned elastomer as a cap layer, the evolution of unreacted monomer can be prevented.

Although polyolefins and elastomeric thermosets have been successfully employed in the manufacture polynorbornene composites obtained by the metathesis ring-opening bulk polymerization, halogenated polyvinyls have never proven successful as lamina(e) with polynorbornene composites. The interface adhesion between the polyvinyl lamina and the polynorbornene substrate has never been acceptable. Accordingly, it would be advantageous to employ halogenated vinyl polymers as lamina(e) in integrally molded composite materials because of the physical properties inherent in such lamina(e).

Halogenated vinyl polymers are inherently flame and smoke resistant, chemical resistant, easily colored, are readily available, and inexpensive. When utilized as lamina(e) in polynorbornene composites, these properties can be imparted to the composite article so formed.

## SUMMARY OF THE INVENTION

Broadly stated, it is an object of the present invention to provide an integrally molded composite article comprising a polynorbornene matrix made by the metathesis ring-opening polymerization of a norbornene-type monomer and a halogenated vinyl polymer lamina.

It is another object of the present invention to provide an integrally molded composite product having superior weatherability and flame resistance.

It is a further object of the present invention to provide a polymer composite having an integrally formed surface without the need for special adhesives.

It is another object of the present invention to provide an integrally molded composite with a colorable surface.

It is still another object of the present invention to provide a method for producing an integrally molded composite material comprising a ring-opened polynorbornene matrix and a halogenated polyvinyl lamina.

These and other objects of the present invention are accomplished by placing a halogenated polyvinyl lamina into a mold cavity and conveying a reactive monomer solution comprising at least one norbornene-type monomer into the mold cavity in contact with at least a portion of a surface of said halogenated polyvinyl lamina and bulk polymerizing the reactive solution in contact with said lamina.

## DESCRIPTION OF THE INVENTION

The present inventors have discovered that the reason for the unacceptable adhesion between polynorbornene-type polymers and halogenated polyvinyl compositions such as polyvinyl chloride (PVC) is due to the various additives blended into the halogenated polyvinyl compositions during resin manufacture and compound processing. For example, during the compounding of halogenated polyvinyl resins additives such as stabilizers and lubricants are blended into the compositions during processing and subsequent fabrication. It has been determined that these materials (hereafter referred to as polymerization inhibitors) inhibit the ring-opening metathesis polymerization of norbornene-type monomers. When attempts were made to polymerize norbornene-type monomers in the presence of polyvinyl substrates, the additives contained in the substrates interfered with the metathesis catalyst system. Consequently, the adhesion at the polynorbornene halogenated vinyl polymer interface was not suitable for integrally molded composites.

In accordance with the present invention it has been discovered that a halogenated vinyl polymer containing substantially no polymerization inhibitors can be successfully employed in the manufacture of integrally molded polynorbornene composites.

## HALOGENATED VINYL POLYMER COMPONENT

Examples of the halogenated vinyl polymers suitable for use in the present invention are polyvinyl chloride (PVC), polyvinylidene chloride (PVDC), and copolymers of vinyl chloride with other vinyl based comonomers such as, for example, ethylene, propylene, isobutylene, styrene, vinyl acetate, methyl acrylate, methyl methacrylate, as well as the chlorinated derivatives thereof.

Halogenated vinyl polymer resins are manufactured by well-known techniques such as, for example, mass polymerization, suspension polymerization, emulsion polymerization or solution polymerization. In a typical polymerization process catalysts, dispersants, emulsifying agents, water, or organic polymerization aids are used. Typically, these materials remain in the polymer product as impurities in amounts of up to about 0.01 to about 5 weight percent. Among these impurities, it has been found that water, alcohol, or anionic surfactants inhibit the ring-opening metathesis polymerization of norbornene-type monomers. Moreover, during the processing of these resins to form the lamina(e) used in the composites of the present invention various additives such as plasticizers, stabilizers, or lubricants, including additives containing free acids such as stearic acid and water (includes the water of hydration), are usually added to impart improved properties to the polymer. However, it has been found that free acids also inhibit the metathesis ring-opening reaction.

Accordingly, the halogenated vinyl resins and compositions utilized in fabricating the vinyl lamina of the present invention must be substantially free of these polymerization inhibitors. By substantially free of polymerization inhibitors is meant that the halogenated vinyl lamina fabricated therefrom contains less than about 0.2 weight percent, preferably less than about 0.1 weight percent of water, alcohols, anionic surfactants, or additives containing free acids.

Commercially available halogenated vinyl polymers satisfying these conditions are PVC manufactured by suspension or emulsion polymerization (obtained by removing surfactants and/or emulsifiers after polymerization), vinyl chloride-vinyl acetate copolymers, vinyl chloride-grafted ethylene-vinyl acetate copolymers. These halogenated vinyl polymers may be used singly or in combination. Conventional methods for removing such polymerization inhibitors from resins are well-known in the art such as, for example, water and solvent washing followed by drying or vacuum drying. In the manufacture and compounding of these polymerization inhibitor-free resins to form the lamina of the present invention, additives containing any polymerization inhibitors must be avoided. Therefor, additives that are moisture and acid free must be utilized.

To improve the thermal stability and weather resistance of the lamina a stabilizer is utilized in the compounding of the resins used in its manufacture. Examples of stabilizers that are free of free acids and water are organotin-based stabilizers selected from dibutyltin maleate, bis(di-n-butyltin monoalkylate), dibutyltin alkylmaleate, dibutyltin laurate maleate, dibutyltin sulfide, and bis(mercapto carboxylate). Phosphite-based stabilizers such as triphenyl phosphite and tri(2-ethylhexyl phosphite) also can be utilized in the compounding the polymerization inhibitor free resins utilized in the fabrication of the present halogenated vinyl polymer lamina(e). Lead-based stabilizers are not often used because they contain polymerization inhibitors such as acid, water, or alkali.

The lamina quality and appearance, i.e., coloring, weather resistance, moldability and formability, etc., can be improved by the addition of pigments, dyes, UV absorbents, plasticizers, lubricants, and the like that are moisture and acid free. Suitable examples are lubricants such as paraffin wax, liquid wax, synthetic paraffin wax, polyethylene wax, and the like. Aliphatic esters (i.e., butyl stearate), aliphatic acids, aliphatic acid salts, aliphatic amides, aliphatic alcohols are polymerization inhibitors and thus cannot be used.

Additives such as polyolefin and hydrocarbon-based thermoplastic elastomers as well as petroleum resins can be added to the polymerization inhibitor-free resins during the compounding and fabrication of the lamina of this invention to improve adhesive properties between the matrix and lamina. Examples of suitable polyolefins are high density polyethylene, medium density polyethylene, low density polyethylene, ethylene-propylene copolymer, ethylene-butene-1-copolymer, polypropylene, polybutene-1, polypentene-1, poly-4-methylepentene-1, polystyrene, ethylene-propylene rubber, ethylene-propylene-diene terpolymer, and mixtures thereof. Examples of hydrocarbon based thermosetting elastomers are the aromatic vinyl compounds, typically styrene (S) and isoprene (I) or butadiene (B) which are conjugated dienes. Copolymer derivatives such as styrene-isoprene (S-I), styrene-butadiene (S-B), styrene-isoprene-styrene (S-I-S), and the like; their hydrogenated adducts; and mixtures thereof.

The halogenated vinyl polymers can be shaped into films, sheets, plates, or any other shape and thickness by extrusion molding, calendaring, blow molding, casting, and the like. The lamina can be pigmented, printed, or patterned.

## MOLDED COMPOSITE

According to the method of this invention the halogenated polyvinyl lamina is affixed to a surface of a mold cavity wall. The lamina can be affixed to any location on the mold cavity surface. More than one lamina can be affixed to the mold cavity surface. For example in the case wherein the mold cavity has a rectangular configuration a sheet or plate like lamina element can be affixed to the top surface of the mold cavity, to the bottom surface of the mold cavity, to the side wall of the mold cavity, or combinations thereof. The lamina can be coextensive with the entire mold cavity surface (e.g.,

top, bottom, or side) or can be coextensive with only a portion thereof, the effect of which is manifested in an entire surface or a portion of a surface of the polynorbornene matrix being laminated.

The lamina component can be affixed to the mold cavity surface by any adhesive that does not permanently bond to the mold cavity surface. The adhesive should be selected so that it readily releases from the mold cavity surface (after the polymerization reaction) with minimal force. The adhesive is applied to the surface of the lamina that will contact the mold cavity wall. Alternatively, double sided tape can be used to affix the lamina component to the mold cavity surface or wall.

Following the affixment of the lamina(e) component to the mold cavity surface(s), a reaction solution comprising a norbornene-type monomer and metathesis catalyst system is injected into the mold (in intimate contact with the surface of the lamina component) and allowed to polymerize by bulk ring-opening polymerization. Following the polymerization reaction (after allowing sufficient time for cooling), an integrally molded composite comprising a polynorbornene matrix and a halogenated polyvinyl lamina is removed from the mold. The composite has excellent interface adhesion between the polynorbornene matrix and lamina(e) layer(s) without the need for adhesives.

In an alternative embodiment of this invention, a halogenated polyvinyl core can be used as a core component in the composite. In this embodiment the halogenated polyvinyl core is placed in a mold cavity of a desired configuration such that a gap is formed between the core component and the surfaces of the mold cavity. In some composite configurations, at least on the core ends can extend up to the mold cavity side wall. When the mold cavity is filled with the monomer reaction, the core is completely or substantially surrounded by the reaction solution. Methods of placing core components in molds are disclosed in copending patent application No. 07/690,038 filed on April 23, 1991, the disclosure of which is hereby fully incorporated by reference. Lamina sheets also can be stacked within the mold cavity such that a gap is provided between lamina layers. The lamina layers can be spaced apart by using spacer elements at each corner of the lamina. Integral spacer elements can be molded into the lamina(e) so when stacked a space or gap is formed between adjacently stacked lamina layers. The gaps and spaces between the lamina layers provide a channel which will eventually be filled with reaction solution.

A filler or a reinforcing material such as glass fiber or a glass fiber mat, can be placed in the mold cavity before the reaction solution is conveyed and the filler or reinforcing into the mold cavity.

## NORBORNENE-TYPE MONOMERS

The substrate polymer utilized in the composites of this invention is a polymer obtained by the metathesis ring-opening polymerization of at least one norbornene-type monomer having a tricyclic or higher cyclic structure. The use of a tricyclic or higher cyclic norbornene-type monomer gives the integrally molded composites of this invention high thermal deformation temperatures. Examples of suitable norbornene-type monomers include tricyclic monomers such as dicyclopentadiene, dihydrodicyclopentadiene, and the like; tetracyclic monomers such as tetracyclododence and the like; pentacyclic monomers such as tricyclopentadiene, and the like; heptacyclic monomers such as tetracyclopentadiene and the like. The alkyl (e.g., methyl, ethyl, propyl, butyl, and the like), alkylidene (e.g., ethylidene, and the like), aryl (e.g., phenyl, tolyl, naphthyl, and the like), and polar (e.g., ester, ether, nitrile, halogen, and the like) derivatives of the foregoing monomer types also are within the scope of this invention. The tricyclic, tetracyclic, and pentacyclic monomers are preferred because they are easily obtained, easily polymerized, and polymers thereof are heat resistant.

The foregoing monomers can be used alone to obtain a homopolymer product or two or more can be mixed to obtain a copolymer product. If a thermoset polymer is desired, a crosslinking monomer can be employed. Suitable crosslinking monomers are any polycyclic norbornene-type monomers containing two or more reactive double bonds. Examples include dicyclopentadiene, tricyclopentadiene, tetracyclododecene, and the like. If the norbornene-type monomer selected for use herein is a crosslinking monomer, the use of other crosslinking comonomers are not necessary.

The foregoing tricyclic or higher cyclic structure norbornene-type monomers can be copolymerized with bicyclic and/or monocyclic olefins monomers so long as the properties of the resulting polymer is not impaired. Examples of suitable bicyclic olefins include norbornadiene, 2-norbornene, 5-methyl-2-norbornene, 5-ethylidene-2-norbornene, 5-phenyl-2-norbornene, and the like. Suitable monocyclic olefins include cyclobutene, cyclopentene, cyclopentadiene, cyclooctene, cyclododecene, and the like.

## CATALYST SYSTEM

Any known metathesis catalyst and cocatalyst suitable for the ring-opening polymerization of norbornene-type monomers can be employed in the invention (see, for example, Japanese Kokai application Nos. 58-127728, 58-129013, 59-51911, 60-79035, 60-186511, and 61-126115. Examples of suitable metathesis catalysts are the halides, oxyhalides, oxides, organic ammonium salts of tungsten, molybdenum, and tantalum, and the like. Examples of suitable cocatalysts are alkylaluminum halides, alkoxyalkylaluminum halides, aryloxyalkylaluminum halides, organotin compounds, and the like.

In addition to the catalyst and cocatalyst, an activating agent can be employed as disclosed in Japanese Kokai application No. 60-79035. Halohydrocarbons such as chloroform, carbon tetrachloride, hexachloropentadiene, or metal halides such as silicon tetrachloride, germanium tetrachloride, and lead tetrachloride can be used.

The amount of metathesis catalyst employed ranges from about 0.01 to about 50 mmol, preferably about 0.1 to about 10 mmol per mole of norbornene-based monomer utilized. The amount of cocatalyst utilized ranges from about 0.1 to about 200 mole ratio based on the catalyst component, preferably in the 2 to 10 (mole ratio) range.

Preferably, the metathesis catalyst and cocatalyst are dissolved in the monomer. So long as product quality is not affected, the catalyst and cocatalyst can be suspended or dissolved in a solvent before introduction into the monomer.

## ADDITIVES

The polymer properties of the matrix can be modified by the addition of additives such as antioxidants, filler materials, strengthening materials, pigments, coloring agents, foaming agents, flame retardants, lubricants, elastomers, and/or dicyclopentadiene type hydrogenated thermopolymer resins. The additives can be added to either one or both reactant solutions, or may be added to a third reactant solution.

Suitable antioxidants include phenolic, phosphorus, or amine type compounds that are commonly used in plastics and rubbers.

Suitable fillers include inorganic materials such as milled glass, long glass fibers, glass mat, carbon black, talc, calcium carbonate, mica, and the like. Reinforcing fibers can be used in this invention to strengthen the outer layer.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene-vinyl acetate copolymer (EVA), and their hydrogenated derivatives. The addition of the elastomer to the reactant solution(s) improves reactant solution viscosity as well as the impact properties of the molded composite product.

In this invention, the reinforcing material may be placed in the mold cavity and then the reaction solution is fed into the cavity and allowed to polymerize in the presence of the reinforcing material. Alternatively, the fiber fillers can be mixed in the reactant solutions before their introduction into the mold. Examples of suitable reinforcing materials are glass fibers, aramid fibers, carbon fibers, ultrahigh molecular weight polyethylene fibers, metal fibers, polypropylene fibers, aluminum coated glass fibers, cotton, acrylic resin fibers, boron fibers, silicon carbide fibers, alumina fibers, and the like. The reinforcing agents can be in the form of long fibers, chopped strand type mat, fabric, chopped fiber, or many other forms suitable for providing reinforcement. The surface of these reinforcing materials can be treated with a silane coupling agent to improve their adhesion to the resin. There are no restrictions to the amount of reinforcing material utilized, but it is commonly not less than about 20 weight percent, preferably between about 30 to 70 weight percent.

**POLYMERIZATION**

In the method of the present invention, the bulk polymerization of norbornene-type monomers in the presence of the metathesis catalyst system is carried out in a mold. A small amount of inert solvent may be present in the formulation so long as the solvent does not adversely affect the polymerization reaction or polymer product produced therefrom.

A preferred bulk ring-opening polymerization method is to divide a norbornene-type monomer solution into two portions and to store them in separate containers. Into one container, the metathesis catalyst is added to form one reactant solution and into the other, the cocatalyst is added to form the other reactant solution. The activating agent, if desired, is preferably added to the cocatalyst reactant solution, but it also can be added to either container or to both containers. The two reactant solutions are then mixed and injected into a mold wherein the reactive solution is in intimate contact with at least one surface of the halogenated polyvinyl lamina and/or core component. The bulk ring-opening polymerization reaction is then carried out in the mold cavity.

Molds made of resin, wood, steel or aluminum can all be used safely. The mold cavity may be of any shape depending on the desired configuration of the composite product.

The two reactant solutions are mixed by using a conventional reaction injection mold (RIM) apparatus. In this case the two reactant solutions are stored in two separate vessels and serve as the source for the two reactant feed streams. The two streams are intimately mixed in the mixing head of the RIM apparatus (impingement mixing head) to form the reaction solution. The mixture is injected into a preheated metal mold and bulk polymerized to produce the integrally molded composite product.

Optionally, after mixing the two reactant solutions, the mixture can be conveyed (poured or injected) into a mold in several portions (batch feeding) as taught in Japanese Kokai Application (Sho) No. 59-51911 (U.S. Patent No. 4,426,502). Alternatively the solution reaction can be injected in a continuous mode. With this method, the apparatus is smaller in comparison to an impingement type mixing apparatus, allowing the process to be carried out at lower operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant-(s) or additive(s) can be employed in the present process.

The mold temperature employed is commonly greater than room temperature (e.g., above $30°C$), preferably between about 40 to $200°C$, and more preferably between about 50 to $130°C$. The mold pressure is commonly between about 0.1 to 100 $kg/cm^2$.

The polymerization time can be determined as needed. However, the time from feeding the reactive solution into the mold cavity to the onset of the polymerization preferably should be less than 20 minutes, preferably within 5 minutes, and more preferably within 2 minutes.

The reactant solutions are stored under an inert gas atmosphere such as nitrogen, and also should be processed under such an inert atmosphere. However, the mold does not necessarily have to contain an inert gas.

A foaming agent can be placed in one or both of the reactant solutions. Suitable foaming agents include aliphatic hydrocarbons such as pentane, hexane, and the like, halohydrocarbons such as methylene chloride, trichlorofluoromethane, dichlorodifluoromethane, and the like; or inert gases such as nitrogen, argon, and the like.

The invention will be discussed in more detail by the following and are not intended to serve as a limitation on the scope thereof. As used in the examples and throughout the specification all parts, ratios, and percents are based on weight, unless otherwise indicated.

In the examples, the moisture content is defined as the weight loss of PVC after heating for two hours at $100°C$ with subsequent vacuum drying and is expressed in a weight loss ratio.

## EXAMPLE 1

Reactant solutions A and B were prepared as follows:

Two formulations comprising 100 parts of dicyclopentadiene (DCP) and 6.5 parts of styrene-isoprene-styrene copolymer (SIS, Nippon Zeon Co., trade name: Quintac 3421) were placed into two separate containers. Into one of the containers (Solution A), diethylaluminum chloride (DEAC), n-propanol, and silicon tetrachloride were added to give, a 41, 39, and 21 mmole concentration, respectively, in DCP. Into the other container (Solution B), tri(tridecyl)ammonium molybdate was added to give a 10 mmol concentration in DCP. Four parts of a phenol-based antioxidant per 100 parts DCP also was added to the solution.

A PVC composition comprising 100 parts PVC resin (Nippon Zeon, 103EP), 1.0 part white pigment (rutile type titanium oxide), 0.5 part dibutyltin dilaurate, 1.0 part 1,6-ditert-butyl-p-cresol, was dispersed in 400 parts of a 20:80 mixture of methyl ethyl ketone to tetrahydrofuran solvent. The resulting formulation was cast into a sheet. The solvent was allowed to evaporate, and the casting was dried in a nitrogen atmosphere at 60°C to obtain a 0.1 mm thick sheet. The PVC lamina had a moisture content of 0.02 percent and was devoid of free acid.

The PVC lamina measuring 20 cm x 20 cm x 0.1 mm was placed flush against the bottom surface of a rectangular mold cavity (20 cm x 20 cm x 0.3 cm). A reaction solution composed of a 1:1 ratio mixture of solutions A and B was injected into the cavity and polymerized for approximately three minutes. The whole operation was carried out under a nitrogen atmosphere. An integrally molded composite panel (approximately 3 mm thick) comprising a polydicyclopentadiene matrix and a PVC surface lamina was obtained.

The integrally molded composite had no discoloration of the PVC layer, the adhesion between the polynorbornene matrix/PVC interface was excellent, the product had a flat surface with no surface sink marks. Attempts were made to delaminate the PVC sheet from the matrix, however, no separation occurred, even after the PVC lamina was ruptured.

## EXAMPLE 2

100 parts of PVC resin (Nippon Zeon Co., 103EP) was compounded with 0.05 part red dye (Azo Red TPH4031, Toyo Ink Co.), 0.5 part triphenyl phosphite, 1.0 part dibutyltin maleate, and 0.5 part polyethylene wax. The composition was calendared into a 1 mm thick sheet, rinsed with toluene and dried at 60°C for 2 hours under low pressure. The moisture content of the PVC sheet was 0.03 percent and it did not contain any free acid.

The PVC lamina measuring 20 cm x 20 cm x 1 mm was placed flush against the bottom surface of a rectangular mold cavity (20 cm x 20 cm x 0.4 cm). The mold was then heated to 80°C. A reaction solution composed of a 1:1 ratio mixture of solutions A and B as disclosed in Example 1 was conveyed into the cavity and polymerized for three minutes. The molding operation was carried out under a nitrogen atmosphere. An integrally molded composite panel comprising a polydicyclopentadiene matrix and a PVC lamina was obtained.

The composite molded product had the same excellent interface adhesion properties as obtained in Example 1.

## EXAMPLE 3

(COMPARISON)

In the composition of Example 2, dibutyltin maleate was replaced with 2 parts of tribasic lead sulfate ($3PbO.PbSO_4.H_2O$). A PVC sheet was prepared according to the procedure of Example 2. The moisture content of the PVC sheet was 0.5 percent and contained no free acid..

The PVC sheet was used to manufacture a composite molded product according to the procedure of Example 2. The product had unacceptable interface adhesion between the substrate and the PVC sheet.

## EXAMPLE 4

(COMPARISON)

In the composition of Example 2, polyethylene wax was replaced with stearic acid and a PVC sheet was prepared according to the procedure of Example 2. The resulting PVC sheet had a moisture content of 0.3 percent and a free acid content of 0.5 percent.

A composite molded product was manufactured as set forth in Example 2. The product had unacceptable adhesion between the substrate and the PVC lamina and separated easily at the interface.

## Claims

1. An integrally molded composite article comprising a polymer matrix and at least one lamina layer wherein said substrate comprises a matrix of a ring-opened norbornene polymer polymerized via metathesis polymerization from at least one norbornene-type monomer in contact with a surface of said lamina, and wherein said lamina comprises a polyvinyl halide composition that is substantially free of metathesis polymerization inhibitors.

2. The article of claim 1 wherein said lamina is coextensive with said polynorbornene substrate.

3. The article of claim 1 wherein said polynorbornene matrix further comprises a reinforcing filler.

4. The article of claim 3 wherein said filler is selected from the group consisting of glass fibers, carbon fibers, and glass fiber mat.

5. The article of claim 1 wherein said polyvinyl halide lamina is selected from the group consisting of polyvinyl chloride, polyvinylidene chloride, and vinyl chloride copolymers in combination with comonomers selected from the group consisting of ethylene, propylene, isobutylene, styrene, vinyl acetate, methyl acrylate, methyl methacrylate and mixtures thereof.

6. The article of claim 1 wherein said norbornene monomer is selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

7. The article of claim 6 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

8. The article of claim 1 wherein said polyvinyl halide contains less than 0.2 weight percent of polymerization inhibitors selected from the group consisting of water, alcohols, anionic surfactants, free acids, and mixtures thereof.

9. The article of claim 8 wherein said polyvinyl halide is polyvinyl chloride.

10. A method for producing an integrally molded composite article comprising a substrate and at least one lamina layer comprising providing a mold cavity having a polyvinyl halide lamina disposed therein; feeding a bulk polymerizable liquid reaction solution comprising at least one norbornene monomer, a metathesis catalyst, and a cocatalyst into said mold cavity, wherein said liquid reaction solution is in contact with at least a portion of said lamina; and polymerizing said norbornene monomer forming a polynorbornene matrix wherein the interface adhesion between the matrix and lamina is excellent.

11. The method of claim 1 wherein said lamina is coextensive with a surface of said mold cavity.

12. The method of claim 1 wherein a glass fiber filler is placed in said mold cavity before said reaction solution is conveyed into said mold cavity.

13. The method of claim 1 wherein said polyvinyl halide lamina is selected from the group consisting of polyvinyl chloride, polyvinylidene chloride, and vinyl chloride copolymers in combination with comonomers selected from the group consisting of ethylene, propylene, isobutylene, styrene, vinyl acetate, methyl acrylate, methyl methacrylate and mixtures thereof.

14. The method of claim 1 wherein said norbornene monomer is selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

15. The method of claim 14 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

16. The method of claim 1 wherein said polyvinyl halide contains less than 0.2 weight percent of polymerization inhibitors selected from the group consisting of water, alcohols, anionic surfactants, free acids, and mixtures thereof.

17. The method of claim 16 wherein said polyvinyl halide is polyvinyl chloride.